# DEMANDE DE BREVET EUROPEEN

(11) **EP 2 224 151 A1**
(43) Date de publication de la demande: **01.09.2010**
(21) Numéro de dépôt: 10154654.7
(22) Date de dépôt: 25.02.2010
(51) Int. Cl.: F16H 57/04, F16H 55/17

(54) **Pignon**

(30) Priorité: 26.02.2009 FR 0951230
(71) Demandeur: Peugeot Citroën Automobiles SA, 78140 Vélizy-Villacoublay (FR)
(72) Inventeur: Wascheul, Michael, 78260, Acheres (FR); Mitchell, Clément, 92250, La Garenne Colombes (FR)

(57) **Abrégé**

Pignon (51) adapté pour être disposé autour d'un arbre et étant pourvu d'au moins une face latérale (12) s'étendant entre une partie périphérique intérieure (13) et une partie périphérique extérieure (14), ladite face latérale comportant une partie en creux (42) comprenant :
- une première extrémité (43) présentant une ouverture en partie périphérique intérieure (13), destinée lorsque le pignon est monté sur un arbre à recevoir et canaliser de l'huile présente sur l'arbre; et
- une seconde extrémité (44) dans le prolongement de la première extrémité (43), obturée au moins partiellement en partie périphérique extérieure (14), de manière à ce qu'un débit d'huile sortant de ladite partie en creux par ladite seconde extrémité, soit nul ou au moins strictement inférieur à un débit d'huile entrant dans ladite partie en creux par ladite première extrémité.

## Description

La présente invention concerne le domaine des pignons, en particulier des pignons destinés à être montés fous sur un arbre.

Un pignon monté fou sur un arbre est libre en rotation autour de l'arbre, ce qui donne lieu à des échauffements. Afin de limiter ces échauffements et donc l'endommagement du pignon, une lubrification du pignon au moins est nécessaire.

On rencontre de tels pignons montés fous sur un arbre notamment dans les boîtes de vitesse.

Les besoins en lubrification des éléments d'une boîte de vitesse, notamment des arbres et des pignons montés sur les arbres, primaire ou secondaire, sont un des aspects à prendre en considération lors de la conception de l'architecture de ces boîtes.

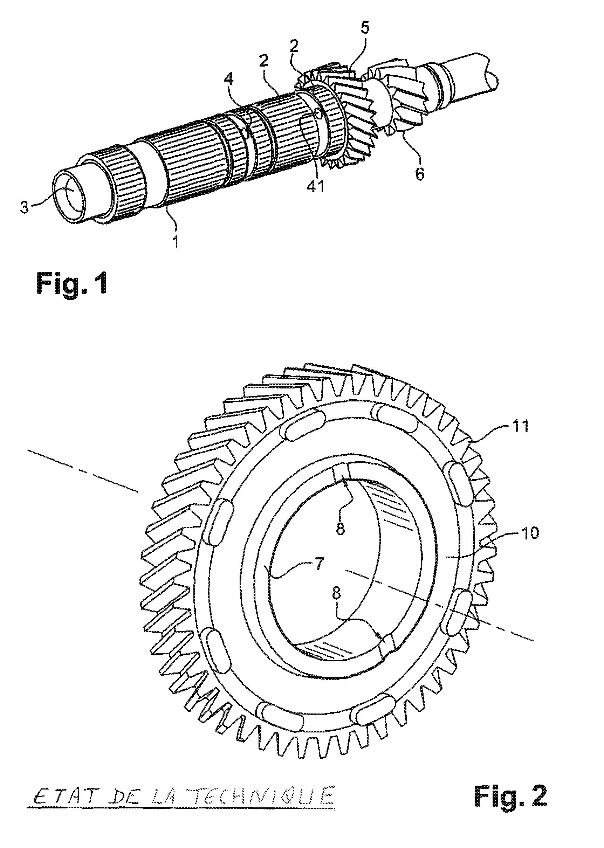

En référence à la vue en perspective représentée en figure 1, l'arbre 1 d'une boîte de vitesse présente généralement sur sa surface extérieure des cannelures 2 s'étendant le long de l'arbre 1.

La boîte de vitesse comporte par ailleurs un ou plusieurs pignons taillés d'un bloc avec l'arbre, par exemple les pignons 5 et 6.

L'huile de lubrification présente en surface extérieure de l'arbre peut cheminer au creux des cannelures 2.

Cette huile présente en surface est par exemple d'abord passée par le conduit intérieur longitudinal 3 de l'arbre 1, qu'on nomme aussi zone de gavage de l'arbre 1, puis a traversé une des cheminées 4 d'alimentation en huile (encore appelées cheminées de gavage d'huile ou distributeurs) percées radialement entre le conduit intérieur 3 et la surface de l'arbre 1.

L'arbre 1 présente, parmi les cheminées 4 de gavage d'huile, une cheminée 41.

Un pignon 10 est représenté en perspective en figure 2. Il est destiné à être monté fou sur les cannelures 2 de l'arbre 1, face à la cheminée 41.

Le pignon 10 comporte une face latérale 7, qui une fois le pignon monté sur l'arbre 1 face à la cheminée 41, est en appui contre le pignon 5. L'extrémité extérieure de la cheminée 41 fait face à la surface intérieure du pignon 10, permettant ainsi de lubrifier cette surface intérieure du pignon 10 et la zone de la surface extérieure de l'arbre 1 située en regard de la surface intérieure du pignon 10.

Le graissage de l'intérieur et de l'extérieur du pignon 10, une fois monté sur l'arbre 1, est ainsi effectué suite au passage de l'huile provenant d'une part de la cheminée 41 et d'autre part sur, et entre, les dents extérieures 11 du pignon 10.

Le pignon 10 présente des évents 8 sur la face latérale 7. Ces évents, sortes de gouttière ou rainure ménagées dans la surface latérale du pignon 10, ont pour fonction de laisser libre passage à l'huile au niveau de la face latérale 7 destinée à être en appui contre le pignon fixe 5 et ainsi lubrifier plus les faces latérales en contact des pignons 5 et 10 ou encore d'autres éléments lors de la rotation des pignons, notamment les crabots pendant le passage du couple moteur.

Par exemple, le document EP 1 939 477 représente en figure 2 un pignon 2b présentant des échancrures 6 (20a) permettant à l'huile de passer librement sur la surface latérale du pignon 2b.

Une des problématiques rencontrées est de limiter la consommation d'huile de lubrification. En effet, plus il y a de pignons, plus la quantité d'huile utilisée est importante. L'huile qui est utilisée pour la lubrification des pignons, ne sert pas à arroser d'autres parties et retourne directement dans le carter.

La récupération d'huile de lubrification dans la boîte de vitesse est notamment mise en oeuvre par l'usage de pompes à huile entraînées mécaniquement ou électriquement, ou de gouttières de récupération, mais cela complexifie l'architecture de la boîte de vitesse.

La présente invention vise à améliorer de façon simple la lubrification d'un système comportant un pignon monté en rotation autour d'un arbre, par exemple dans une boîte de vitesse.

A cet effet, suivant un premier aspect, l'invention propose un pignon adapté pour être disposé autour d'un arbre et étant pourvu d'au moins une face latérale s'étendant entre une partie périphérique intérieure et une partie périphérique extérieure de la face latérale.

La face latérale comporte une partie en creux qui comprend :
- une première extrémité présentant une ouverture en partie périphérique intérieure, destinée, lorsque le pignon est monté sur un arbre, à recevoir et canaliser de l'huile présente sur l'arbre ; et
- une seconde extrémité dans le prolongement de la première extrémité, obturée au moins partiellement en partie périphérique extérieure, de manière à ce qu'un débit d'huile sortant de la partie en creux par la seconde extrémité, soit nul ou au moins strictement inférieur à un débit d'huile entrant dans la partie en creux par la première extrémité.

L'objet de l'invention permet ainsi de restreindre la consommation en huile sur des zones ciblées dans un système comportant un pignon monté sur un arbre, ce qui permet de disposer de davantage d'huile sur d'autres endroits du système et ainsi d'optimiser l'efficacité de la lubrification globale de ce système.

Les pertes d'huiles dues au retour de l'huile utilisée uniquement pour l'arrosage des pignons sont ainsi diminuées.

Dans un mode de réalisation, la seconde extrémité est obturée totalement en partie périphérique extérieure. Les pertes d'huile sont ainsi limitées au maximum.

Suivant un deuxième aspect, l'invention propose un système comprenant un arbre et un pignon suivant le premier aspect de l'invention, le pignon étant disposé autour de l'arbre.

Suivant un troisième aspect, l'invention propose une boîte de vitesse comportant un système suivant le deuxième aspect de l'invention.

L'invention sera mieux comprise à la lecture de la description qui suit et à l'examen des figures qui l'accompagnent. Ces figures listées ci-dessous sont données à titre illustratif, et nullement limitatif de l'invention :
- la figure 1 représente une vue en perspective d'un arbre d'une boîte de vitesse dans laquelle l'invention peut être mise en oeuvre ;
- la figure 2 représente une vue en perspective d'un pignon de l'art antérieur, destiné à être monté sur un arbre tel que représenté en figure 1 ;
- la figure 3 représente une vue en perspective d'un pignon dans un mode de réalisation de l'invention ;
- la figure 4 représente une vue en section longitudinale d'une partie de l'arbre 1 de la figure 1 sur lequel le pignon de la figure 3 est monté.

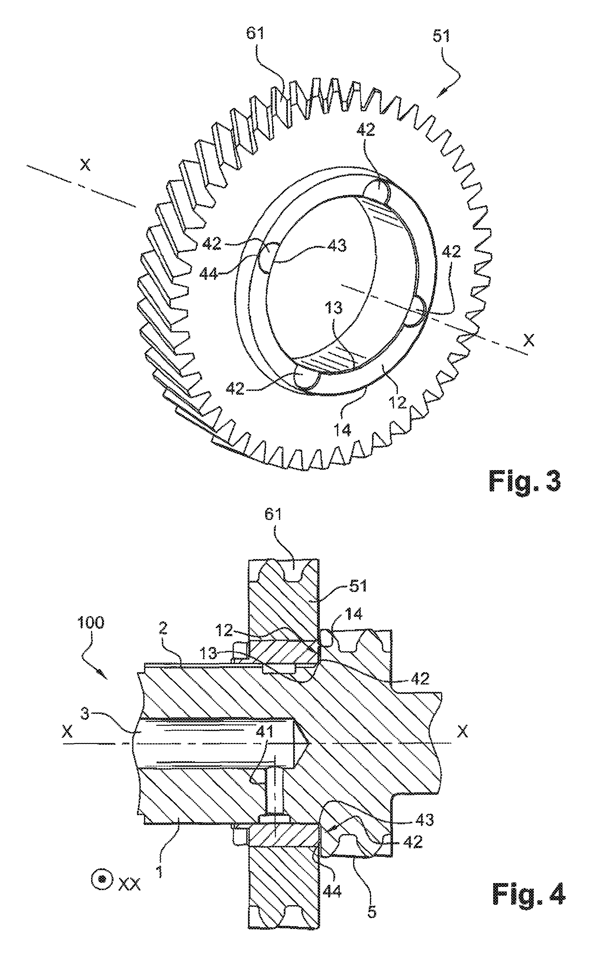

Sur la figure 3 est représenté en perspective un pignon 51 dans un mode de réalisation de l'invention.

Par exemple, ce pignon 51 est destiné à être utilisé à la place du pignon 10 représenté en figure 2, dans une boîte de vitesse manuelle comportant un arbre primaire ou secondaire tel que représenté en figure 1.

La figure 4 représente en coupe latérale un système 100, par exemple une partie de cette boîte de vitesse, dans lequel le pignon 51 est monté fou sur l'arbre 1 de la figure 1.

Le pignon 51, muni de dents 61 sur sa surface périphérique extérieure, comporte une face latérale 12 s'étendant sensiblement perpendiculairement à l'axe de rotation XX du pignon 51.

Dans le mode de réalisation représenté, la face latérale 12 est destinée à venir en appui contre le pignon 5 de l'arbre 1.

La face latérale 12 s'étend entre une zone périphérique intérieure 13 et une zone périphérique extérieure 14, disposées autour de l'axe XX

La zone périphérique intérieure 13 est destinée à faire face à l'arbre 1 et donc à être en contact avec l'huile présente en surface de l'arbre 1, notamment en provenance de la cheminée d'alimentation 41 située sous le pignon 51.

Dans le mode de réalisation représenté, la face latérale 12, sensiblement en forme d'anneau, est pourvue de quatre réserves 42 encastrées et disposées uniformément autour de l'axe XX. On notera que le nombre et la disposition des réserves sont adaptables en fonction des contraintes imposées par l'architecture de la boîte de vitesse et des résultats souhaités en termes d'optimisation de la lubrification.

Une réserve 42 ménagée dans la face latérale 12 est adaptée pour capter et canaliser de l'huile présente au niveau des cannelures 2 de l'arbre 1, lorsque le pignon 51 est monté sur l'arbre 1.

Dans le mode de réalisation considéré, une réserve 42 comporte une première extrémité 43 qui est ouverte au niveau de la périphérie intérieure 13, de manière à permettre à de l'huile présente au niveau de l'arbre 2, de s'engager dans la réserve 42. La forme de la première extrémité 43 est par exemple de type rainure.

La réserve 42 est adaptée pour stocker au moins en partie l'huile captée et ainsi restreindre le passage de l'huile ainsi captée au-delà de la zone périphérique extérieure 14.

Dans le mode de réalisation représenté en figures 3 et 4, la réserve 42 présente dans le prolongement de la première extrémité 43, une seconde extrémité 44 qui est fermée au niveau de la zone périphérique extérieure 14 de la face 12.

Dans le cas représenté en figure 3, cette extrémité fermée dessine un demi-cercle dans un plan perpendiculaire à l'axe XX.

L'huile contenue par la réserve 42 et provenant de la première extrémité 43 est donc maintenue dans la réserve 42.

Dans un autre mode de réalisation non représenté, la réserve comporte une seconde extrémité 44 qui est ouverte au niveau de la zone périphérie extérieure 14 de la face 12, mais qui est conçue de sorte que le débit de sortie de l'huile permis depuis la seconde extrémité 44 vers l'extérieure de la face 12 est strictement inférieur au débit d'entrée de l'huile dans la réserve permis par la première extrémité 43.

Les pertes d'huile dues à la lubrification des pignons sont ainsi diminuées.

Les petites quantités d'huile dans les réserves 42 permettent de lubrifier les flancs du pignon 51.

L'invention permet la réalisation de poches d'huile, permettant de restreindre le débit d'huile sur des zones précises et augmentant ainsi la quantité d'huile disponible pour la lubrification d'autres zones de la boîte de vitesse.

Par ailleurs, les réserves d'huile ont également pour effet de diminuer les risques de grippage survenant dans une boîte de vitesse après un redémarrage en rotation du pignon, lorsque le pignon vient s'engager avec un manchon suite au passage du couple moteur.

La forme de la réserve peut être très variée, le but étant de laisser passer un débit d'huile très faible, par exemple simplement sous l'effet du jeu latéral du pignon le long de l'arbre (ce jeu peut être par exemple compris entre 0,06 mm et 0,35 mm).

Dans un mode de réalisation, la fabrication des pignons selon l'invention est réalisée par forgeage ou frittage.

L'invention a été décrite ci-dessus dans un mode de réalisation dans le cas d'un pignon destiné à une boîte de vitesse. Bien entendu, un pignon selon l'invention est utilisable dans tout système, autre qu'une boîte de vitesse et nécessitant une lubrification maîtrisée du pignon disposé autour d'un arbre.

## Revendications

1. Pignon (51) adapté pour être disposé autour d'un arbre et étant pourvu d'au moins une face latérale (12) s'étendant entre une partie périphérique intérieure (13) et une partie périphérique extérieure (14) de ladite face latérale, ladite face latérale comportant une partie en creux (42) qui comprend :
- une première extrémité (43) présentant une ouverture en partie périphérique intérieure (13), destinée lorsque le pignon est monté sur un arbre à recevoir et canaliser de l'huile présente sur l'arbre ; et
- une seconde extrémité (44) dans le prolongement de la première extrémité (43), obturée au moins partiellement en partie périphérique extérieure (14), de manière à ce qu'un débit d'huile sortant de ladite partie en creux par ladite seconde extrémité, soit nul ou au moins strictement inférieur à un débit d'huile entrant dans ladite partie en creux par ladite première extrémité.

2. Pignon (51) selon la revendication 1, dans lequel la seconde extrémité (44) est obturée totalement en partie périphérique extérieure.

3. Système (100) comprenant un arbre (1) et un pignon (51) selon la revendication 1 ou 2 qui est disposé autour dudit arbre.

4. Boîte de vitesse comportant un système (100) selon la revendication 3.
